(19) Europäisches Patentamt

European Patent Office

Office européen des brevets

(11) Veröffentlichungsnummer: **0 296 575 B1**

(12) **EUROPÄISCHE PATENTSCHRIFT**

(45) Veröffentlichungstag der Patentschrift: **21.10.92**

(21) Anmeldenummer: **88109978.2**

(22) Anmeldetag: **23.06.88**

(51) Int. Cl.⁵: **B09B 3/00**, B09B 1/00

(54) Verfahren zur Oberflächenbehandlung von Deponiekörpern mit niedriger Durchlässigkeit.

(30) Priorität: **25.06.87 DE 3720948**

(43) Veröffentlichungstag der Anmeldung:
**28.12.88 Patentblatt 88/52**

(45) Bekanntmachung des Hinweises auf die
Patenterteilung:
**21.10.92 Patentblatt 92/43**

(84) Benannte Vertragsstaaten:
**AT BE CH DE FR GB LI LU NL**

(56) Entgegenhaltungen:
**DE-A- 2 154 156**
**DE-A- 2 950 462**
**US-A- 3 721 183**

(73) Patentinhaber: **Rheinische Kalksteinwerke GmbH.
Wilhelmstrasse 77
W-5603 Wülfrath(DE)**

(72) Erfinder: **Roeder, Alfred Dr. rer. nat.
Dipl.-Phys.
Falkstrasse 112
W-4100 Duisburg(DE)**
Erfinder: **Radermacher, Günter, Dr. Dipl.-Phys.
Tillmannsdorferstrasse 3
W-5603 Wülfrath(DE)**
Erfinder: **Schmitz, Friedrich Dr. Dipl.-Chem.**

**Verstorben(DE)**
Erfinder: **Rösner, Hans-Joachim
Weststrasse 7
W-5603 Wülfrath(DE)**

**Beschreibung**

Die Erfindung betrifft ein Verfahren zur Oberflächenbehandlung von aus betonartigen Mörtelmischungen aufgebauten monolithischen Deponiekörpern mit einem Durchlässigkeitsbeiwert von kleiner $10^{-9}$ m/s, die durch Wasser auslaugbare Bestandteile enthalten.

Zur chemischen Bindung von sauren Schadstoffen in Abgasen werden häufig körnige oder aufgemahlene Karbonatgesteinsmehle, aus gebranntem Kalk oder Kalkhydrat hergestellte Suspensionen sowie trockenes Kalziumhydroxid eingesetzt. Die analytische Zusammensetzung der bei den verschiedenen Abgasreinigungsverfahren anfallenden Rückstände variiert in weiten Grenzen, stets, ist aber die Kalziumkomponente der eingesetzten Kalziumreagenzien vollständig in den Rückständen enthalten, zum Teil nach Umsetzung mit den Schadstoffen.

Es wird angestrebt, die Rückstände weiterer Verwendungen zuzuführen. Dies ist aber insbesondere bei Anwesenheit von toxischen Bestandteilen nicht immer möglich. Bei Anwesenheit von wasserlöslichen Chloridsalzen ist z.B. die Verwendung im Straßenbau problematisch, weil zu hoch belastete Eluate unkontrolliert ins Grundwasser gelangen können. Daher wird angestrebt, diese und andere mit ähnlichen Problemen behaftete Rückstände aus der Abgasreinigung in offenen Abfalldeponien zu lagern.

Aus der Deutschen Offenlegungsschrift 29 50 462 ist bekannt, die Abfallstoffe nach Mischen mit einem hydraulischen Bindemittel unmittelbar in einen Deponieraum einzubringen, um eine möglichst kompakte Lagerung des Abfalls zu erreichen. Bei Abfällen mit hohem Salz- und Schwermetallgehalt muß allerdings die Mischung zunächst in Fässer aus Kunststoff oder Metall eingefüllt werden, die dann zusätzlich einbetoniert werden. Nur so war es bisher möglich zu vermeiden, daß durch Direktkontakt mit Niederschlagswasser unzulässige Mengen an Salzen und Schwermetallen abgeführt wurden.

Der Erfindung liegt daher die Aufgabe zugrunde, bei einem offenen monolithischen Deponiekörper zu erreichen, daß Oberflächenwasser nicht mehr unzulässig kontaminiert wird.

Die Aufgabe wird bei einem Verfahren der eingangs genannten Art dadurch gelöst, daß die Oberfläche des Deponiekörpers über einen Zeitraum von 8 bis 40 Tagen mit Wasser oder wäßriger Lösung in Mengen von 0,3 bis 0,7 m³ je m² Oberfläche berieselt wird, wobei die Lösung teilweise oder vollständig im Kreislauf geführt wird, und daß anschließend mit Wasser gespült wird. Eine besonders vorteilhafte Ausgestaltung der Erfindung besteht darin, daß über den Zeitraum von 8 bis 40 Tagen die Berieselung diskontinuierlich in mindestens 5 Zeitintervallen mit jeweils mindestens 1/20 der Gesamtmenge an Lösung durchgeführt wird.

Aus der Oberfläche eines chloridhaltigen Mörtels kann, insbesondere nach einer nur kurzen Aushärtezeit von 1 bis 2 Tagen, immer eine gewisse Chloridmenge ausgelaugt werden, die vom Chloridgehalt, der Porigkeit des betonartigen Mörtels bzw. von dessen Dichte und der davon abhängigen Durchlässigkeit (ausgedrückt im Durchlässigkeitsbeiwert $K_f$) und von der Zeit abhängig ist. Nach dem erfindungsgemäßen Verfahren läßt sich aber durch Berieselung die Oberfläche so weit auslaugen, daß danach auftretendes Niederschlagswasser nicht mehr unzulässig kontaminiert wird; es entspricht den Eluaten der Deponieklasse I. Für die Auslaugung der Chlorid- und Sulfatverbindungen aus den oberflächennahen Schichten ist nicht unbedingt Frischwasser erforderlich, sondern die Auslaugung kann auch mit schadstoffhaltigen Lösungen, z.B. kreislaufgeführten kontaminierten Oberflächenwässern durchgeführt werden, sofern ausreichender Abstand in der Sulfat- und Chloridkonzentration zur maximal möglichen Konzentration besteht. Die Erfindung wird nachfolgend an 3 Beispielen näher beschrieben.

Beispiel 1

Bei einer Mischung mit Massenanteilen von 50 % Stäuben aus Müllverbrennungsanlagen, 28 % Aschen aus zirkulierender Wirbelschichtfeuerung und 22 % Zement betrug der gesamte Massenanteil an Chlorid 7 %. Auf 100 kg dieser Mischung wurden 42 kg Anmachwasser zugegeben.

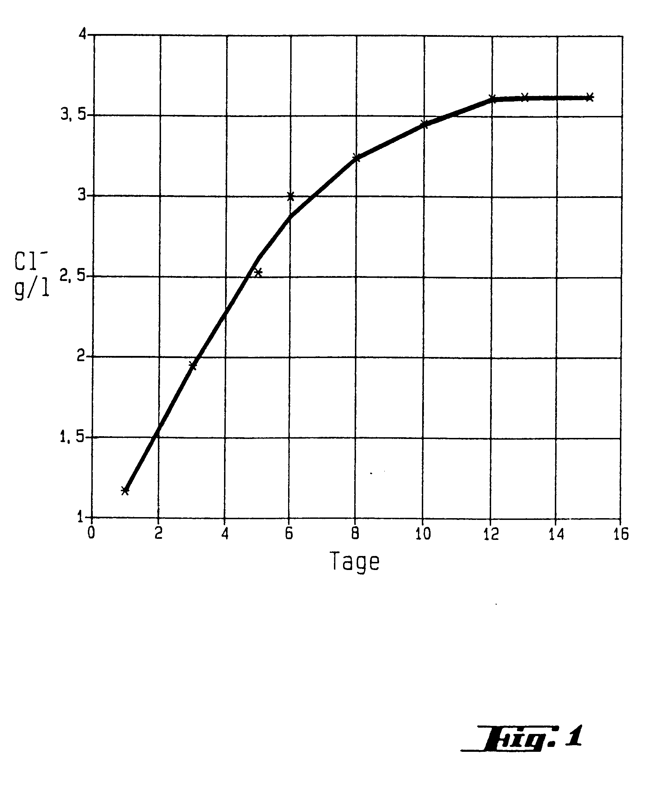

Daraus wurde ein monolithischer Deponiekörper hergestellt, der bei einer Breite von 1 m und einer Länge von 1,85 m in einer Stärke von ca. 15 cm betonartig eingestampft und größer 95 % proctorverdichtet wurde. Die Durchlässigkeit betrug nach einer Erhärtungszeit von 7 Tagen $K_f$ = 5 x $10^{-10}$ m/s. 90 l Wasser wurden für die Dauer von einer Stunde über die schräg geneigte Oberfläche geleitet. Die Lösung wurde aufgefangen und es wurde die Chloridionenkonzentration bestimmt. Der Berieselungsvorgang wurde mit der Lösung innerhalb der gesamten Behandlungsdauer von 15 Tagen noch 8mal wiederholt, so daß die gesamte über die Oberfläche geleitete Menge Lösung 0,44 m³ je m² Oberfläche betrug. Anschließend wurde mit Frischwasser gespült. Die Chloridionenkonzentration der Kreislauflösung in Abhängigkeit von der Aushärtezeit ist in Fig. 1 dargestellt. Geringe Verlustmengen durch Versickern und Verdunsten wurden wieder aufgefüllt. Zwischen den Berieselungsversuchen wurde die Oberfläche feucht gehalten.

Beispiel 2

Im Laborversuch wurde die Oberfläche eines aus der Mischung des Beispiels 1 hergestellten Proctorkörpers umspült, der folgende Abmessungen hatte: Durchmesser 0,1 m, Höhe 0,12 m, Fläche 0,0534 m². Dieser Proctorkörper wurde einmal pro Tag für eine Stunde in eine Lösungsmenge von 2,67 l getaucht, die dann ständig umgepumpt wurde. Nach 21 Tagen erfolgte die Umstellung auf Frischwasser.

Beispiel 3

Zur Trockenmischung aus Beispiel 1 wurden auf 100 kg Mischung 65 kg Wasser zugegeben.

Auf einer vorbereiteten Deponiefläche mit einer Breite von 7 m und einer Länge von 15 m, die über die Länge ein Gefälle von 4 % aufwies, wurde die pumpfähige Mischung in einer Stärke von ca. 15 cm aufgebracht. Die Durchlässigkeit betrug nach einer Erhärtungszeit von 48 Stunden $K_f = 5 \times 10^{-10}$ m/s. Danach wurden 2700 l Wasser innerhalb von 35 Minuten über die Oberfläche des Deponiekörpers geleitet. Die Lösung wurde aufgefangen und es wurde die Chloridionenkonzentration bestimmt. Der Berieselungsvorgang wurde mit der Lösung innerhalb der gesamten Behandlungsdauer von 33 Tagen noch 19mal wiederholt. Die gesamte über die Oberfläche geleitete Menge Lösung betrug 0,51 m³/m². Anschließend wurde mit Frischwasser gespült. Dabei war praktisch keine Zunahme der Chloridionenkonzentration mehr festzustellen.

Die Aufkonzentrierung der im Kreislauf geführten Lösung ist, wie sich gezeigt hat, praktisch unabhängig von der Oberfläche. Wenn die erreichte Konzentration der Kreislauflösung sich praktisch nicht mehr änderte, wurde erneut mit Frischwasser berieselt. Dieses Frischwasser wurde nicht mehr unzulässig kontaminiert. Der Chloridgehalt der Lösung war kleiner als 200 mg Chlorid/l.

**Patentansprüche**

1. Verfahren zur Oberflächenbehandlung von aus betonartigen Mörtelmischungen aufgebauten monolithischen Deponiekörpern mit einem Durchlässigkeitsbeiwert von kleiner $10^{-9}$ m/s, die durch Wasser auslaugbare Bestandteile enthalten,
   **dadurch gekennzeichnet, daß**
   die Oberfläche des Deponiekörpers über einen Zeitraum von 8 bis 40 Tagen mit Wasser oder wäßriger Lösung in Mengen von 0,3 bis 0,7 m³ je m² Oberfläche berieselt wird, wobei die Lösung teilweise oder vollständig im Kreislauf geführt wird, und daß anschließend mit Wasser gespült wird.

2. Verfahren nach Anspruch 1, dadurch gekennzeichnet, daß über den Zeitraum von 8 bis 40 Tagen die Berieselung diskontinuierlich in mindestens 5 Zeitintervallen mit jeweils mindestens 1/20 der Gesamtmenge an Lösung durchgeführt wird.

**Claims**

1. A method for the surface treatment of monolithic waste blocks made of concrete-like mortar mixtures and having a permeability coefficient less than $10^{-9}$ m/s, said blocks containing water-soluble components, characterised in that the surface of the waste block is sprayed with water or an aqueous solution in quantities of 0.3 to 0.7 m³ per m² for a period of between 8 and 40 days, the solution being partially or entirely conveyed in a circuit, and the waste block is subsequently rinsed with water.

2. A method according to claim 1, characterised in that the spraying is carried out intermittently over the period of 8 to 40 days in at least 5 time intervals with at least 1/20 of the overall quantity of solution in each case.

**Revendications**

1. Procédé de traitement en surface de blocs de déchets monolithiques constitués de mélanges de mortier à nature de béton avec un coefficient de perméabilité inférieur à $10^{-9}$ m/s, qui contiennent des composants lessivables à l'eau, caractérisé en ce qu'on fait ruisseler à la surface des corps de déchets pendant 8 à 40 jours de l'eau ou une solution aqueuse à raison de 0,3 à 0,7 m³ par m² de surface, la solution étant recyclée totalement ou partiellement, et ensuite on rince avec de l'eau.

2. Procédé selon la revendication 1, caractérisé en ce qu'on réalise le ruissellement sur une période de temps de 8 à 40 jours en discontinu sur au moins 5 intervalles de temps avec chaque fois au moins 1/20 de la quantité totale de solution.

Fig. 1